(19) Europäisches Patentamt
European Patent Office
Office européen des brevets

(11) EP 4 782 979 A1

(12) EUROPEAN PATENT APPLICATION
published in accordance with Art. 153(4) EPC

(43) Date of publication:
29.07.2026 Bulletin 2026/31

(51) International Patent Classification (IPC):
G06F 3/04845 (2022.01)    G06F 3/04842 (2022.01)
G06F 9/451 (2018.01)

(21) Application number: 24903929.8

(22) Date of filing: 18.10.2024

(52) Cooperative Patent Classification (CPC):
G06F 3/04842; G06F 3/04845; G06F 9/451

(86) International application number:
PCT/KR2024/015874

(87) International publication number:
WO 2025/127362 (19.06.2025 Gazette 2025/25)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 12.12.2023 KR 20230179910
03.01.2024 KR 20240001026
22.04.2024 KR 20240053547

(71) Applicant: Samsung Electronics Co., Ltd.
Suwon-si, Gyeonggi-do 16677 (KR)

(72) Inventors:
• KIM, Jeonghoon
  Suwon-si Gyeonggi-do 16677 (KR)
• KWON, Banghyun
  Suwon-si Gyeonggi-do 16677 (KR)
• LEE, Keonil
  Suwon-si Gyeonggi-do 16677 (KR)
• KIM, Sangheon
  Suwon-si Gyeonggi-do 16677 (KR)
• LIM, Yeunwook
  Suwon-si Gyeonggi-do 16677 (KR)

(74) Representative: HGF
HGF Limited
4th Floor, 1 City Square
Leeds LS1 2ES (GB)

(54) **ELECTRONIC DEVICE FOR GENERATING BACKGROUND SCREEN AND OPERATION METHOD THEREOF**

(57) Disclosed are an electronic device for generating a background screen and an operating method thereof. The electronic device according to an embodiment of the present disclosure may comprise a memory for storing instructions. The electronic device may comprise a processor for executing the instructions. The instructions, when executed by the processor, may cause the electronic device to extract a target object from an image. The instructions, when executed by the processor, may cause the electronic device to divide, into a first frame and a second frame, a target frame to be displayed together with the target object among a plurality of frames. The instructions, when executed by the processor, may cause the electronic device to determine the priority between the target object, the first frame, and the second frame on the basis of the location of the target object. The instructions, when executed by the processor, may cause the electronic device to display, on a display module, a background screen generated by arranging the target object, the first frame, and the second frame according to priority.

FIG. 2

Start

→ Extract target object from image — 210

→ Divide, into first frame and second frame, target frame to be displayed together with target object among plurality of frames — 220

→ Determine priority between target object, first frame, and second frame, based on position of target object — 230

→ Display, on display module, background screen generated by arranging target object, first frame, and second frame according to priority — 240

End

EP 4 782 979 A1

## Description

## TECHNICAL FIELD

An electronic device for generating a background screen and an operation method thereof are disclosed.

## BACKGROUND ART

As times change, more and more people desire to express their individuality to the outside world. Accordingly, electronic devices such as smartphones, which have become essential in everyday life, are being used as one of the many ways to express individuality. For example, people are using images that best express their individuality as background screens on electronic devices such as smartphones. However, some people may go beyond simply using images as background screens and may apply various effects to the background screens.

The above description has been possessed or acquired by the inventor(s) in the course of conceiving the present disclosure and is not necessarily an art publicly known before the present application is filed.

## DISCLOSURE OF THE INVENTION

## TECHNICAL SOLUTIONS

An electronic device according to an embodiment of the disclosure includes memory storing instructions. The electronic device includes a processor that executes the instructions. The instructions, when executed by the processor, cause the electronic device to extract a target object from an image. The instructions, when executed by the processor, cause the electronic device to divide, into a first frame and a second frame, a target frame to be displayed together with the target object among a plurality of frames. The instructions, when executed by the processor, cause the electronic device to determine a priority between the target object, the first frame, and the second frame based on a position of the target object. The instructions, when executed by the processor, cause the electronic device to display, on a display module, a background screen generated by arranging the target object, the first frame, and the second frame according to the priority.

An electronic device according to an embodiment of the disclosure includes memory storing instructions. The electronic device includes a processor that executes the instructions. The instructions, when executed by the processor, cause the electronic device to extract a target object from an image. The instructions, when executed by the processor, cause the electronic device to divide, into a first frame and a second frame, a target frame to be displayed together with the target object among a plurality of frames 400, based on a shape of an object area included in the target frame. The instructions, when executed by the processor, cause the electronic device to display, on a display module, a background screen generated by arranging the target object, the first frame, and the second frame.

An operation method of an electronic device according to an embodiment of the disclosure includes extracting a target object from an image. The operation method includes dividing, into a first frame and a second frame, a target frame to be displayed together with the target object among a plurality of frames. The operation method includes determining a priority between the target object, the first frame, and the second frame based on a position of the target object. The operation method includes displaying, on a display module, a background screen generated by arranging the target object, the first frame, and the second frame according to the priority.

A non-transitory computer-readable storage medium according to an embodiment of the disclosure may perform the operation method described above.

## BRIEF DESCRIPTION OF DRAWINGS

FIG. 1 is a block diagram illustrating an electronic device in a network environment according to various embodiments.
FIG. 2 is a diagram illustrating an operation method of an electronic device according to an embodiment of the disclosure.
FIG. 3 is a diagram illustrating the extraction of a target object according to an embodiment of the disclosure.
FIG. 4 is a diagram illustrating frames according to various embodiments of the disclosure.
FIGS. 5 to 8 are diagrams illustrating the division of a target frame according to an embodiment of the disclosure.
FIGS. 9 and 10 are diagrams illustrating an overlap area according to an embodiment of the disclosure.
FIG. 11 is a diagram illustrating a priority according to an embodiment of the disclosure.
FIG. 12 is a diagram illustrating a change in priority according to an embodiment of the disclosure.
FIG. 13 is a diagram illustrating a change in priority according to an arrangement of a target object according to an embodiment of the disclosure.
FIG. 14 is a diagram illustrating a range in which a target object may move according to an embodiment of the disclosure.
FIG. 15 is a diagram illustrating an example in which a video is set as a background screen according to an embodiment of the disclosure.
FIG. 16 is a diagram illustrating the movement of objects included in a background screen according to an embodiment of the disclosure.
FIGS. 17 and 18 are diagrams schematically illustrating an operation of an electronic device according to an embodiment of the disclosure.

FIG. 19 is a diagram illustrating an overlap between a second frame and a target object according to an embodiment of the disclosure.

## MODE FOR CARRYING OUT THE INVENTION

Hereinafter, embodiments will be described in detail with reference to the accompanying drawings. When describing the embodiments with reference to the accompanying drawings, like reference numerals refer to like components and a repeated description related thereto will be omitted.

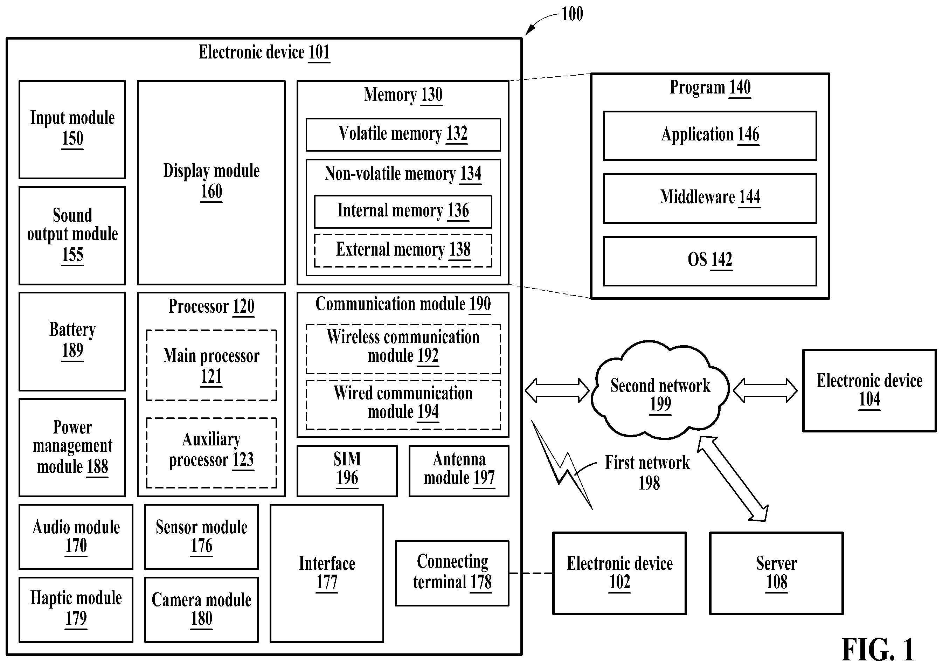

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added to the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an ISP or a CP) may be implemented as part of another component (e.g., the camera module 180 or the communication module 190) functionally related to the auxiliary processor 123. According to an embodiment, the auxiliary processor 123 (e.g., the NPU) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), a deep Q-network or a combination of two or more thereof, but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing a recording. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or an external electronic device (e.g., an electronic device 102) (e.g., a speaker or headphones) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

The connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, ISPs, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more CPs that are operable independently from the processor 120 (e.g., the AP) and support a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth™, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multiple components (e.g., multiple chips) separate from each other. The wireless communication module 192 may identify and authenticate the electronic device 101 in a communication network, such as the first network 198 or the second network 199, using subscriber information (e.g., international mobile subscriber identity (IMSI)) stored in the SIM 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 197 may transmit or receive a signal or power to or from the outside (e.g., the external electronic device). According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a PCB, an RFIC disposed on a first surface (e.g., the bottom surface) of the PCB, or adjacent to the first surface and capable of supporting a designated high-frequency band (e.g., the mmWave band), and a plurality of antennas (e.g., array antennas) disposed on a second surface (e.g., the top or a side surface) of the PCB, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-Things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspects (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it. This allows the machine to be operated to perform at least one function according to the at least one instruction invoked. The one or more instructions may include code generated by a compiler or code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore™), or between two user devices (e.g., smartphones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

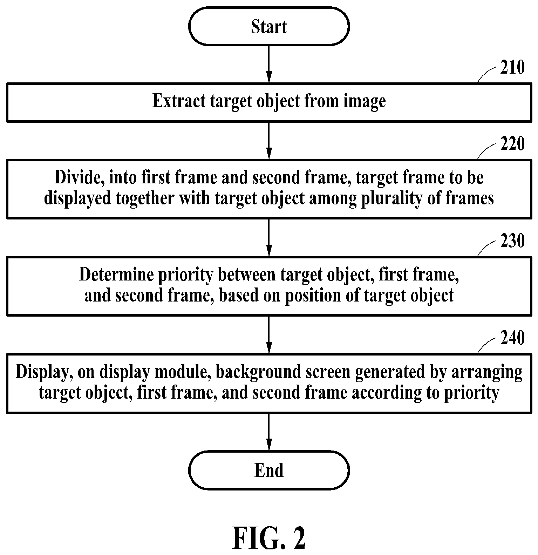

FIG. 2 is a diagram illustrating an operation method of an electronic device according to an embodiment of the disclosure.

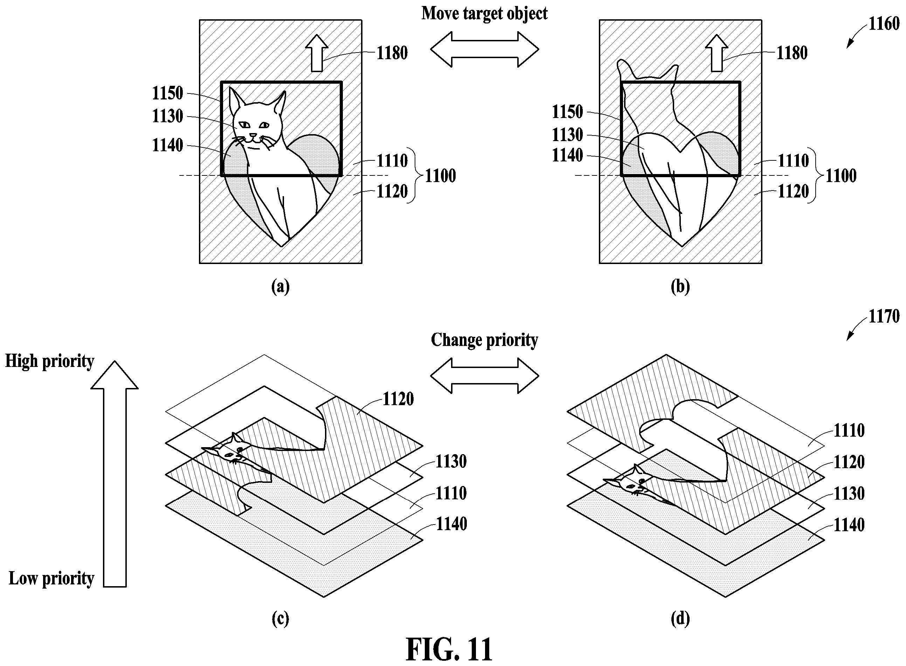

Hereinafter, operations may be performed sequentially, without being limited thereto. For example, the order of each operation may be changed, and at least two operations may be performed in parallel. The operations illustrated in FIG. 11 may be performed by at least one component (e.g., the processor 120 of FIG. 1) of an electronic device (e.g., the electronic device 101 of FIG. 1).

In operation 210, the electronic device may extract a target object from an image.

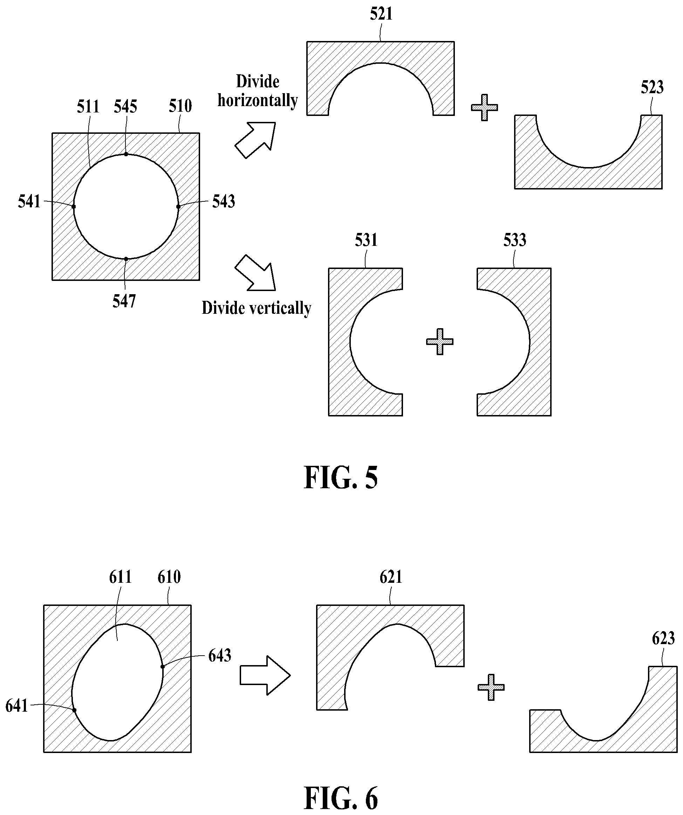

In operation 220, the electronic device may divide, into a first frame and a second frame, a target frame to be displayed with the target object among a plurality of frames. The electronic device may divide the target frame based on a reference pixel. A method of determining a reference pixel and dividing a target frame is further described below with reference to FIGS. 5 to 8.

In operation 230, the electronic device may determine a priority between the target object, the first frame, and the second frame based on a position of the target object.

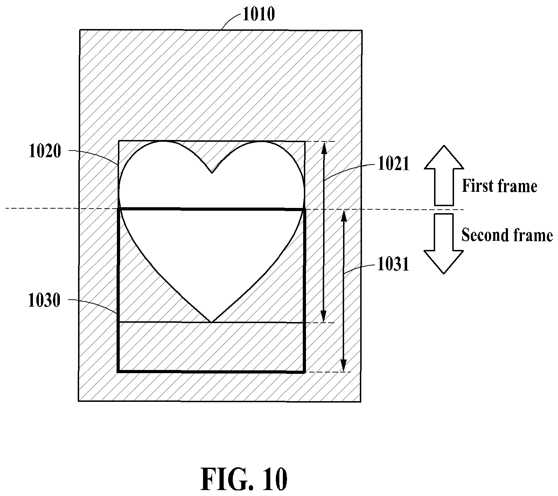

The electronic device may generate a background screen based on the priority. In some embodiments, the background screen may provide a three-dimensional effect. A method of determining the priority is further described below with reference to FIGS. 10 and 11.

In operation 240, the electronic device may display, on a display module (e.g., the display module 160 of FIG. 1), a background screen generated by arranging the target object, the first frame, and the second frame according to the priority.

The background screen may be a screen that appears on a home screen of the electronic device as well as on a lock screen of the electronic device.

The operations of the electronic device described above and operations of the electronic device to be described below may be executed by one or more processors. According to an embodiment, when instructions are executed by the one or more processors, the instructions may cause the electronic device to perform the operations described above and the operations to be described below. The instructions may be stored in a single memory (e.g., the memory 130 of FIG. 1), or may be divided and stored in a plurality of memories.

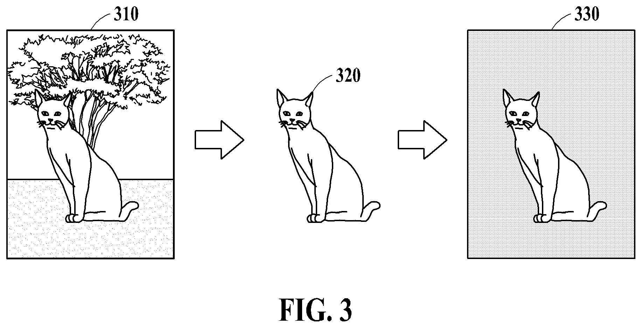

FIG. 3 is a diagram illustrating the extraction of a target object according to an embodiment of the disclosure.

An electronic device (e.g., the electronic device 101 of FIG. 1) may extract a target object 320 from a target image 310. The target object 320 may be a variety of objects, such as a person, an animal, an object, or a building. The electronic device may select the target image 310 in various ways. For example, the electronic device may select the target image 310 in response to a selection command to select the target image 310 in a gallery application that displays images stored in the electronic device. For example, the electronic device may receive a command to change a background screen on a screen displaying options for the background screen, and may select the target image 310 from among a plurality of images displayed according to the command, in response to the selection command to select the target image 310.

The electronic device may set a background screen using the target image 310 according to various commands after selecting the target image 310. For example, the electronic device may receive a command from a user through a separate settings menu in order to enter a menu for setting the target image 310 as the background screen. For example, the electronic device may display a pop-up window in response to a user's long press on the target image 310, and may receive a command through the pop-up window to enter a menu for setting the background screen.

The electronic device may receive a command to set the target image 310 itself as the background screen or a command to extract the target object 320 from the target image 310 and set the extracted target object 320 as the background screen. When the command to set the target image 310 itself as the background screen is received, the target image 310 may be set as the background screen. When the electronic device receives the command to extract the target object 320 and set the extracted target object 320 as the background screen, the electronic device may extract the target object 320 from the target image 310. In an embodiment, the command to extract the target object 320 and set the extracted target object 320 as the background screen may include an input of long pressing the target object 320 in the target image 310. The electronic device may extract the target object 320 from the target image 310 in response to receiving the long press input on the target object 320. In an embodiment, the command to extract the target object 320 and set the extracted target object 320 as the background screen may include an input (e.g., a user input for selecting an area to be extracted from the target image 310 as a closed curve) for selecting an area around the target object 320 in the target image 310. The electronic device may extract the target object 320 or at least a portion of the target image 320 including the target object 320 based on the input selecting an area around the target object 320.

In other words, the electronic device may separate a background and the target object 320 from the target image 310. The electronic device may extract the target object 320 in various ways. For example, the electronic device may extract the target object 320 using an artificial intelligent (AI) model that extracts the target object 320. The electronic device may extract the target object 320 using an extraction module that extracts the target object 320. The electronic device may transmit the target image 310 to a separate server (e.g., the server 108 of FIG. 1) that communicates with the electronic device, and receive the extracted target object 320 from the server.

According to an embodiment, the target image 310 may include one or more objects. The electronic device may output, as the target object 320, an object determined to be a main object among one or more objects. The electronic device may display candidate objects to be output as the target object 320 among one or more objects, and extract a candidate object selected according to a user's selection command as the target object 320. The electronic device may directly extract an object selected from the one or more objects according to the user's selection command as the target object 320.

The electronic device may add a background area 330 to the target object 320. The electronic device may add the background area 330 with various colors and effects applied.

Hereinafter, a frame to be displayed together with the target object 320 and the background area 330 is described.

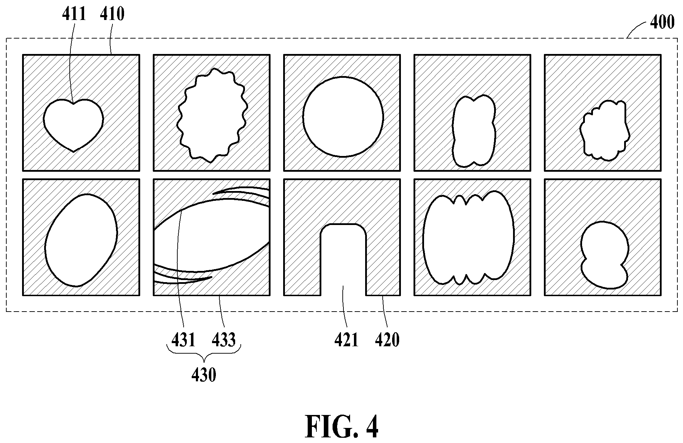

FIG. 4 is a diagram illustrating frames according to various embodiments of the disclosure.

Referring to FIG. 4, a plurality of frames 400 that may be displayed together with a target object (e.g., the target object 320 of FIG. 3) is illustrated. The plurality of frames 400 may be in the form of a picture frame. The electronic device may select a target frame to be displayed together with the target object from among the plurality of frames 400. The electronic device may select the target frame based on a command to select the target frame.

The electronic device may first select a target image (e.g., the target image 310 of FIG. 3) and then select the target frame. In another example, the electronic device may select a target image after selecting the target frame.

The plurality of frames 400 illustrated in FIG. 4 is merely an example, and the present disclosure is not limited thereto. In other words, an electronic device (e.g., the electronic device 101 of FIG. 1) may provide more frames in addition to the frames illustrated in FIG. 4.

Referring to FIG. 4, each frame may include an object area of a different shape. The object area may be a transparent area. In other words, the object area may be an area where at least a portion of the target object extracted from the target image is placed. An area excluding the object area in each frame may be referred to as a frame area. The frame area, unlike the object area, may be an opaque area.

According to an embodiment, some of the plurality of frames 400 may include an object area having a closed-shaped. For example, referring to frame 410, the frame 410 may include an object area 411 having a closed-shape. Two reference pixels may be determined for the frame 410 including the object area 411 having a closed-shape.

According to an embodiment, some of the plurality of frames 400 may include an object area having an open-shape. For example, referring to frame 420, the frame 420 may include an object area 421 having an open-shape. It should be understood that a dotted line shown in the object area 421 is to illustrate the object area 421 and is not part of the frame 420. The frame 420 including the object area 421 having an open-shape may have one, or two reference pixels determined.

In an embodiment, some of the plurality of frames 400 may be divided from the beginning. For example, referring to frame 430, the frame 430 may include a first frame 431 and a second frame 433. In the frame 430 having a completely open shape, such as the frame 430, a process of determining a reference pixel and dividing the frame based on the reference pixel, which is described later with reference to FIGS. 5 to 8, may be omitted.

Hereinafter, a method of determining reference pixels for various frames and dividing the frames based on the reference pixels is described.

FIGS. 5 to 8 are diagrams illustrating the division of a target frame according to an embodiment of the disclosure.

Referring to FIG. 5, a target frame 510 including an object area 511 (e.g., the object area 411 of FIG. 4) having a closed-shape is illustrated. The target frame 510 may be a frame selected to be displayed together with a target object (e.g., the target object 320 of FIG. 3) from among a plurality of frames (e.g., the plurality of frames 400 of FIG. 4). Before dividing the target frame 510, an electronic device (e.g., the electronic device 101 of FIG. 1) may have to determine one or more reference pixels in the target frame 510. The electronic device may divide the target frame 510 based on the one or more reference pixels. That is, the electronic device may determine the reference pixels based on the shape of the object area 511 and divide the target frame 510 based on the reference pixels.

According to an embodiment, the electronic device may determine a leftmost pixel 541 and a rightmost pixel 543 of the object area 511 as the reference pixels to horizontally divide the target frame 510. The leftmost pixel 541 of the object area 511 may be located at a leftmost position in the object area 511. That is, when an origin of a terminal coordinate system is a lower left position of a display module (e.g., the display module 160 of FIG. 1), the leftmost pixel 541 may be a pixel having the smallest x-coordinate value among pixels included in the object area 511. The rightmost pixel 543 of the object area 511 may be a pixel located at a rightmost position in the object area 543. That is, when the origin of the terminal coordinate system is a lower left position of the display module, the rightmost pixel 543 may be a pixel with the greatest x-coordinate value among the pixels included in the object area 511. When the leftmost pixel 541 and the rightmost pixel 543 are determined, the electronic device may divide the target frame 510 based on the leftmost pixel 541 and the rightmost pixel 543. The electronic device may divide the target frame 510 into a first frame 521 and a second frame 523. The first frame 521 may be an upper frame and the second frame 523 may be a lower frame. However, this is only an example, and the first frame 521 may not always be determined as the upper frame, and the second frame 523 may not always be determined as the lower frame.

According to an embodiment, the electronic device may determine an uppermost pixel 545 and a lowermost pixel 547 of the object area 511 as the reference pixels to vertically divide the target frame 510. The uppermost pixel 545 of the object area 511 may be located at an uppermost position in the object area 511. That is, when the origin of the terminal coordinate system is a lower left position of the display module, the uppermost pixel 545 may be a pixel with the greatest y-coordinate value among the pixels included in the object area 511. The lowermost pixel 547 of the object area 511 may be located at a lowermost position in the object area 547. That is, when the origin of the terminal coordinate system is a lower left position of the display module, the lowermost pixel 547 may be a pixel having the smallest y-coordinate value among the pixels included in the object area 511. When the uppermost pixel 545 and the lowermost pixel 547 are determined, the electronic device may divide the target frame 510 based on the uppermost pixel 545 and the leftmost pixel 547. The electronic device may divide the target frame 510 into a first frame 531 and a second frame 533. The first frame 531 may be a left frame and the second frame 533 may be a right frame. However, this is only an example, and the first frame 521 may not always be determined as the left frame, and the second frame 523 may not always be determined as the right frame.

According to an embodiment, the horizontal or vertical division of the target frame 510 may be provided according to a user's selection. For example, horizontal division of the target frame 510 may be the default setting. However, the electronic device may provide the user with vertical division as a separate option, and the user may input a command to the electronic device to perform vertical division by selecting the separate option. The electronic device may vertically divide the target frame 510 in response to receiving the command.

Referring to FIG. 6, a target frame 610 (e.g., the target frame 510 of FIG. 5) is illustrated, which includes an object area 611 (e.g., the object area 411 of FIG. 4 and the object area 511 of FIG. 5) having a closed-shape.

Referring to FIG. 6, when dividing the target frame 610 into upper and lower portions, reference pixels of the target frame 610 may not exist at the same height. In other words, y-coordinate values of a leftmost pixel 641 (e.g., the leftmost pixel 541 of FIG. 5) and a rightmost pixel 643 (e.g., the rightmost pixel 543 of FIG. 5) of the target frame 610 may be different. Accordingly, a first frame 621 (e.g., the first frame 521 of FIG. 5) and a second frame 623 (e.g., the second frame 523 of FIG. 5) divided based on the leftmost pixel 641 and the rightmost pixel 643 may not have upper-lower symmetry.

Although not shown in FIG. 6, when the target frame 610 is divided into left and right portions, the reference pixels of the target frame 610 may not have the same x-coordinate values. In other words, x-coordinate values of an uppermost pixel (e.g., the uppermost pixel 545 of FIG. 5) and a lowermost pixel (e.g., the lowermost pixel 547) may be different. Therefore, a first frame (e.g., the first frame 531 of FIG. 5) and a second frame (e.g., the second frame 533 of FIG. 5) divided based on the uppermost pixel and the lowermost pixel may not be symmetrical left and right.

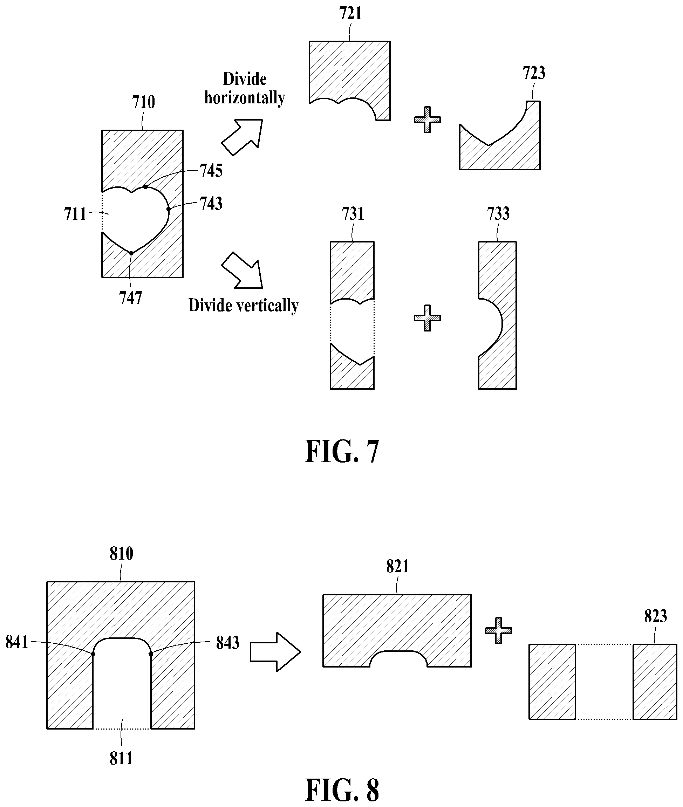

Referring to FIG. 7, a target frame 710 (e.g., the target frame 510 of FIG. 5 and the target frame 610 of FIG. 6) is illustrated, which includes an object area 711 (e.g., the object area 421 of FIG. 4) having an open-shape. Before dividing the target frame 710, an electronic device (e.g., the electronic device 101 of FIG. 1) may have to determine one or more reference pixels in the frame 710. The electronic device may divide the target frame 710 based on the one or more reference pixels.

According to an embodiment, the electronic device may determine a leftmost pixel (e.g., the leftmost pixel 541 of FIG. 5 and the leftmost pixel 641 of FIG. 6) and/or a rightmost pixel 743 (e.g., the rightmost pixel 543 of FIG. 5 and the rightmost pixel 643 of FIG. 6) of the object area as the reference pixel to horizontally divide the frame 710. For example, referring to FIG. 7, since the object area has a shape that is open to the left, the rightmost pixel 743 may be determined as the reference pixel. When the object area has a shape that is open to the right, the leftmost pixel may be determined as the reference pixel. When the object area has a shape that is open to an upper or lower side, the leftmost pixel and the rightmost pixel 743 may be determined as the reference pixels. The method of determining the leftmost pixel and the rightmost pixel is described above with reference to FIG. 5, so a repeated description is omitted. The electronic device may divide the frame 710 into a first frame 721 (e.g., the first frame 521 of FIG. 5 and the first frame 621 of FIG. 6) and a second frame 723 (e.g., the second frame 523 of FIG. 5 and the second frame 623 of FIG. 6) based on the rightmost pixel 743.

According to an embodiment, the electronic device may determine an uppermost pixel 745 (e.g., the uppermost pixel 545 of FIG. 5) and/or a lowermost pixel 747 (e.g., the lowermost pixel 547 of FIG. 5) of the object area as the reference pixel to vertically divide the frame 710. Since the object area 711 has a shape that is open to the left, the uppermost pixel 745 and the lowermost pixel 747 may be determined as the reference pixels. When the object area has a shape that is open upwards, the lowermost pixel 747 may be determined as the reference pixel. When the object area has a shape that is open downwards, the uppermost pixel 745 may be determined as the reference pixel. The method of determining the uppermost pixel 745 and the lowermost pixel 747 is described above with reference to FIG. 5, so a repeated description is omitted. The electronic device may divide the frame 710 into a first frame 731 (e.g., the first frame 531 of FIG. 5) and a second frame 733 (e.g., the second frame 533 of FIG. 5) based on the uppermost pixel 745 and the lowermost pixel 747.

However, referring to FIG. 7, there may be a plurality of uppermost pixels 745. A method of selecting a reference pixel in this case is further described below with reference to FIG. 8.

Referring to FIG. 8, a target frame 810 (e.g., the target frame 510 of FIG. 5, the target frame 610 of FIG. 6, and the target frame 710 of FIG. 7) including an object area 811 (e.g., the object area 411 of FIG. 4 and the object area 711 of FIG. 7) having an open-shape is illustrated. When the target frame 810 is divided into upper and lower portions, according to the method of determining the reference pixel described above with reference to FIG. 5, there may be a plurality of pixels existing at the leftmost side. Similarly, there may be a plurality of pixels existing at the rightmost side. Additionally, according to the method of determining the reference pixel described above with reference to FIG. 5, there may be a plurality of pixels existing at the uppermost side. Similarly, there may be a plurality of pixels existing at the rightmost side. In such cases, an electronic device (e.g., the electronic device 101 of FIG. 1) may determine the reference pixel in various ways.

According to an embodiment, the electronic device may determine a pixel located at the highest position or a pixel located at the lowest position among a plurality of leftmost pixels as a reference pixel. The electronic device may determine a pixel located at the highest position or a pixel located at the lowest position among a plurality of rightmost pixels as the reference pixel. The electronic device may determine the rightmost pixel or the leftmost pixel among a plurality of uppermost pixels as the reference pixel. The electronic device may determine the rightmost pixel or the leftmost pixel among a plurality of lowermost pixels as the reference pixel.

According to an embodiment, the electronic device may determine the reference pixel differently depending on a direction in which the object area 811 is open. For example, when the object area 811 is open toward a lower edge, the electronic device may determine a pixel at the highest position among the leftmost pixels as a reference pixel 841. For example, when the object area 811 is open toward the lower edge, the electronic device may determine a pixel at the highest position among the rightmost pixels as a reference pixel 843. For example, when the object area is open toward an upper edge, the electronic device may determine a pixel at the lowest position among the leftmost pixels as the reference pixel. For example, when the object area is open toward the lower edge, the electronic device may determine a pixel at the lowest position among the rightmost pixels as the reference pixel 843. For example, when the object area is open toward a left corner, the electronic device may determine a pixel at the rightmost position among the uppermost pixels as the reference pixel. For example, when the object area is open toward the left corner, the electronic device may determine a pixel at the rightmost position among the lowermost pixels as the reference pixel. For example, when the object area is open toward a right corner, the electronic device may determine a pixel at the leftmost position among the uppermost pixels as the reference pixel. For example, when the object area is open toward the right corner, the electronic device may determine a pixel at the leftmost position among the lowermost pixels as the reference pixel.

The above-described embodiments are merely examples, and the method by which the electronic device determines a reference pixel is not limited thereto. Additionally, according to an embodiment, the electronic device may receive a position of a reference pixel input by a user. For example, the electronic device may determine a reference pixel using any of the methods described above and display the determined reference pixel to the user. The electronic device may change a position of a reference pixel in response to a user command to change the position of the reference pixel.

Referring to FIG. 8, when the object area 811 is open toward the lower edge, a pixel at the highest position among a plurality of leftmost pixels may be determined as the reference pixel 841. Additionally, a pixel at the highest position among a plurality of rightmost pixels may be determined as the reference pixel 843. The electronic device may divide the target frame 810 into a first frame 821 (e.g., the first frame 521 of FIG. 5, the first frame 621 of FIG. 6, and the first frame 721 of FIG. 7) and a second frame 823 (e.g., the first frame 523 of FIG. 5, the second frame 623 of FIG. 6, and the second frame 723 of FIG. 7), based on the determined reference pixels.

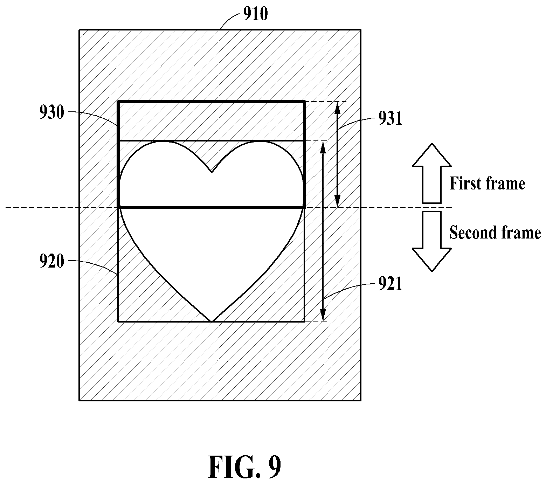

FIGS. 9 and 10 are diagrams illustrating an overlap area according to an embodiment of the disclosure.

Referring to FIG. 9, an example illustrates an overlap area 930 when a target frame 910 (e.g., the target frame 510 of FIG. 5, the target frame 610 of FIG. 6, the target frame 710 of FIG. 7, and the target frame 810 of FIG. 8) is divided into upper and lower portions. The overlap area 930 may be an area that may overlap with a target object (e.g., the target object 320 of FIG. 3) when the target object and the target frame 910 are to be displayed together. In other words, the overlap area 930 may be an area where the target object may overlap the target area 930.

When the electronic device divides the target frame 910 into upper and lower portions, the overlap area 930 may be placed on the upper frame. In other words, the target frame 910 may be divided into a first frame (e.g., the first frame 521 of FIG. 5, the first frame 621 of FIG. 6, the first frame 721 of FIG. 7, and the first frame 821 of FIG. 8) and a second frame (e.g., the first frame 523 of FIG. 5, the second frame 623 of FIG. 6, the second frame 723 of FIG. 7, and the second frame 823 of FIG. 8), and in this case, the overlap area 930 may be an area where the first frame may overlap with the target object.

Some of the vertices of the overlap area 930 may correspond to one or more reference pixels. A height 931 of the overlap area 930 may be determined based on a height 921 of a rectangle 920 surrounding an object area (e.g., the object area 411 of FIG. 4, the object area 421 of FIG. 4, the object area 511 of FIG. 5, the object area 611 of FIG. 6, the object area 711 of FIG. 7, and the object area 811 of FIG. 8). For example, the height 931 of the overlap area 930 may be determined as n% of the height 921 of the rectangle 920.

According to an embodiment, the height 931 of the overlap area 930 may be greater than a height of the first frame. For example, when the object area is adjacent to an upper edge of the first frame, the height 931 of the overlap area 930 may be determined to be greater than the height of the first frame. In this example, the electronic device (e.g., the electronic device 101 of FIG. 1) may determine the height 931 of the overlap area 930 as the height of the first frame from the one or more reference pixels.

Referring to FIG. 10, an example illustrates an overlap area 1030 when a target frame 1010 (e.g., the target frame 510 of FIG. 5, the target frame 610 of FIG. 6, the target frame 710 of FIG. 7, the target frame 810 of FIG. 8, and the target frame 910 of FIG. 9) is divided into upper and lower portions. The overlap area 1030 may be an area that may overlap with a target object when the target object (e.g., the target object 320 of FIG. 3) and the target frame 1010 are displayed together later. In other words, the overlap area 1030 may be an area where the target object may overlap the target area 1030.

When the electronic device divides the target frame 1010 into upper and lower portions, the overlap area 1030 may be placed on the upper frame. In other words, the target frame 910 may be divided into a first frame (e.g., the first frame 521 of FIG. 5, the first frame 621 of FIG. 6, the first frame 721 of FIG. 7, and the first frame 821 of FIG. 8) and a second frame (e.g., the first frame 523 of FIG. 5, the second frame 623 of FIG. 6, the second frame 723 of FIG. 7, and the second frame 823 of FIG. 8), and in this case, the overlap area 1030 may be an area where the second frame may overlap with the target object.

Some of the vertices of the overlap area 1030 may correspond to one or more reference pixels. A height 1031 of the overlap area 1030 may be determined based on a height 1021 (e.g., the height 921 of FIG. 9) of a rectangle 1020 (e.g., the rectangle 920 of FIG. 9) surrounding an object area (e.g., the object area 411 of FIG. 4, the object area 421 of FIG. 4, the object area 511 of FIG. 5, the object area 611 of FIG. 6, the object area 711 of FIG. 7, and the object area 811 of FIG. 8). For example, the height 1031 (e.g., the height 931 of FIG. 9) of the overlap area 1030 may be determined as m% of the height 1021 of the rectangle 1020.

According to an embodiment, the height 1031 of the overlap area 1030 may be greater than a height of the second frame. For example, when the object area is adjacent to a lower edge of the second frame, the height 1031 of the overlap area 1030 may be determined to be greater than the height of the second frame. In this example, the electronic device (e.g., the electronic device 101 of FIG. 1) may determine the height 1031 of the overlap area 1030 as the height of the second frame from the one or more reference pixels.

According to an embodiment, the electronic device may determine that the overlap area 1030 is included in the upper frame (e.g., the first frame) or the lower frame (e.g., the second frame). For example, the electronic device may provide a default setting for including an overlap area in the first frame. However, the electronic device may provide a separate option to include the overlap area in the second frame. A command to include the overlap area in the second frame may be generated by a separate option selected by a user to include the overlap area in the second frame. The electronic device may change the overlap area to be included in the second frame based on the command.

The description of the overlap area described above with reference to FIGS. 9 and 10 may be equally applied to when the target frame is divided into left and right portions, and therefore, a repeated description is omitted. However, it should be understood that when the target frame is divided into left and right portions, the width of the overlap area may be determined as k% of the width of a rectangle surrounding the object area, and the overlap area may be an area that may overlap with the target object in the divided left or right frame.

Hereinafter, a method of determining a priority between a first frame, a second frame, and target objects using the above-described overlap area is described.

FIG. 11 is a diagram illustrating a priority according to an embodiment of the disclosure.

Referring to FIG. 11, an arrangement of a first frame 1110 (e.g., the first frame 521 of FIG. 5, the first frame 621 of FIG. 6, the first frame 721 of FIG. 7, and the first frame 821 of FIG. 8), a second frame 1120 (e.g., the first frame 523 of FIG. 5, the second frame 623 of FIG. 6, the second frame 723 of FIG. 7, and the second frame 823 of FIG. 8), a target object 1130 (e.g., the target object 320 of FIG. 3), and a background area 1140 (the background area 330 of FIG. 3) according to a priority is illustrated. Drawing 1160 illustrates a display of the first frame 1110, the second frame 1120, the target object 1130, and the background area 1140 according to a priority on a display module (e.g., the display module 160 of FIG. 1). Drawing 1170 illustrates a layer relationship between the first frame 1110, the second frame 1120, the target object 1130, and the background area 1140 according to a priority.

Referring to drawing 1170, an electronic device (e.g., the electronic device 101 of FIG. 1) may extract the target object 1130 from an image (e.g., the target image 310 of FIG. 3), divide a target frame 1100 (e.g., the target frame 510 of FIG. 5, the target frame 610 of FIG. 6, the target frame 710 of FIG. 7, the target frame 810 of FIG. 8, the target frame 910 of FIG. 9, and the target frame 1010 of FIG. 10) based on a reference pixel, and determine a priority between the first frame 1110, the second frame 1120, and the target object 1130.

In FIG. 11, an overlap area 1150 (e.g., the overlap area 930 of FIG. 9 and the overlap area 1030 of FIG. 10) may be included in the first frame 1110. The overlap area 1150 is described above with reference to FIGS. 9 and 10, so a repeated description will be omitted.

When the target frame 1100 is divided into the first frame 1110 and the second frame 1120, and the target object 1130 is extracted, the electronic device may determine the priority between the first frame 1110, the second frame 1120, and the target object 1130 to display on the display module. The electronic device may determine the priority between the first frame 1110, the second frame 1120, and the target object 1130 based on a position of the target object 1130. The electronic device may determine the background area 1140 to have the lowest priority. Accordingly, referring to drawing 1170, it may be seen that the priority of the background area 1140 is always the lowest.

The electronic device may determine whether a portion of the target object 1130 exists beyond the overlap area in a direction 1180 in which the overlap area 1150 exists. The direction 1180 in which the overlap area 1138 exists may be a direction in which the overlap area 1150 exists based on a point where the target frame 1100 is divided. For example, the direction 1180 in which the overlap area 1150 exists may be a direction toward an upper edge of the target frame 1100 when the overlap area 1130 is included in the first frame 1110. For example, the direction 1180 in which the overlap area 1150 exists may be a direction toward a lower edge of the target frame 1100 when the overlap area 1130 is included in the second frame 1120.

The electronic device may determine a priority between the target object 1130 and a frame including the overlap area 1130 based on whether a portion of the target object 1130 exists beyond the overlap area in the direction 1180 in which the overlap area 1130 exists. The electronic device may determine that a frame (e.g., the first frame 1110 of FIG. 11) including the overlap area has a lower priority than the target object 1130 when a portion of the target object 1130 does not exist beyond the overlap area in the direction 1180 in which the overlap area 1130 exists. In this example, the electronic device may determine that a frame (e.g., the second frame 1120 of FIG. 11) not including the overlap area 1150 has the highest priority. (c) may be an example showing the priority corresponding to (a). Therefore, referring to (c), the priority may be determined to be high in the order of the second frame 1120, the target object 1130, the first frame 1110, and the background area 1140. (a) may be an example screen displayed on the display module in the order of the second frame 1120, the target object 1130, the first frame 1110, and the background area 1140 according to the priority corresponding to (c).

The electronic device may determine that a frame (e.g., the first frame 1110 of FIG. 11) including the overlap area 1150 has a higher priority than the target object 1130 when a portion of the target object 1130 exists beyond the overlap area in the direction 1180 in which the overlap area 1130 exists. In this example, the priority of the frame including the overlap area 1150 and the priority of the frame not including the overlap area 1150 may both be determined to be higher than the priority of the target object 1130. (d) may be an example showing the priority corresponding to (b). Therefore, referring to (d), the priority may be determined to be high in the order of the first frame 1110, the second frame 1120, the target object 1130, and the background area 1140. (b) may be an example screen displayed on the display module in the order of the first frame 1110, the second frame 1120, the target object 1130, and the background area 1140 according to the priority corresponding to (d).

The position of the target object 1130 may move. For example, the electronic device may move the position of the target object 1130 in response to receiving from a user a command to move the target object 1130. Accordingly, the electronic device may change the priority between the first frame 1110, the second frame 1120, and the target object 1130 according to the position movement of the target object 1130. In other words, the electronic device may change the priority from (c) to (d) or from (d) to (c). Accordingly, the electronic device may change the display of the display module from (a) to (b) or from (b) to (a).

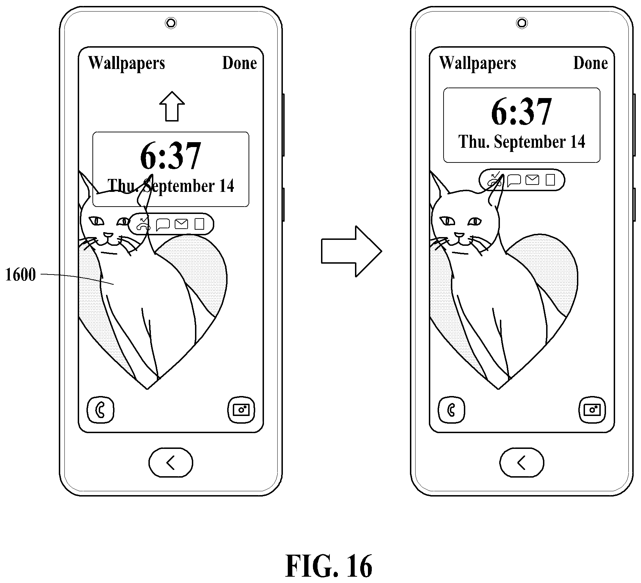

It should be apparent to one skilled in the art that the above description may also be applied to a case (e.g., FIG. 16) where the overlap area 1150 is included in the second frame 1120. Likewise, it should be apparent to one skilled in the art that the above description may be applied when the target frame 1100 is divided into left and right portions.

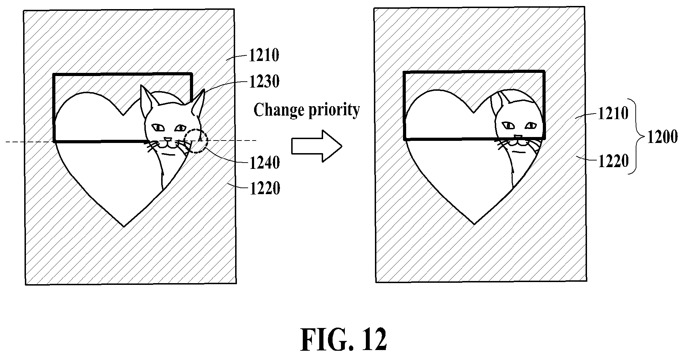

FIG. 12 is a diagram illustrating a change in priority according to an embodiment of the disclosure.

Referring to FIG. 12, when a target frame (e.g., the target frame 510 of FIG. 5, the target frame 610 of FIG. 6, the target frame 710 of FIG. 7, the target frame 810 of FIG. 8, the target frame 910 of FIG. 9, the target frame 1010 of FIG. 10, and the target frame 1100) is divided into a first frame 1210 (e.g., the first frame 521 of FIG. 5, the first frame 621 of FIG. 6, the first frame 721 of FIG. 7, the first frame 821 of FIG. 8, and the first frame 1110 of FIG. 11) and a second frame 1220 (e.g., the first frame 523 of FIG. 5, the second frame 623 of FIG. 6, the second frame 723 of FIG. 7, the second frame 823 of FIG. 8, and the second frame 1110 of FIG. 11), and a target object 1230 (e.g., the target object 320 of FIG. 3 and the target object 1130 of FIG. 11) is moved according to a user's command to move the target object 1230, a crack area 1240 may occur in which the target object 1230 exists beyond an object area (e.g., the object area 411 of FIG. 4, the object area 421 of FIG. 4, the object area 511 of FIG. 5, the object area 611 of FIG. 6, the object area 711 of FIG. 7, and the object area 811 of FIG. 8). In other words, the target object 1230 may overlap with a reference pixel.

The crack area 1240 may be caused by the target object 1230 not existing beyond an overlap area (e.g., the overlap area 930 of FIG. 9, the overlap area 1030 of FIG. 10, and the overlap area 1150) and thus being determined to have a higher priority than a frame including the overlap area.

According to an embodiment, when the crack area 1240 occurs, an electronic device may change a priority of the target object 1230 depending on whether a transparency of a pixel of the target object 1230 overlapping the reference pixel is greater than or equal to a threshold value. For example, when the transparency of the pixel of the target object 1230 overlapping the reference pixel is greater than a threshold value, the priority of the target object 1230 may be changed to a lower priority than the frame including the overlap area. The reference pixel may be a pixel that serves as a reference for dividing the target frame described with reference to FIGS. 5 to 8.

According to an embodiment, the electronic device may prevent a target object from moving further toward a reference pixel when a transparency of a pixel of the target object overlapping the reference pixel is greater than or equal to a threshold value.

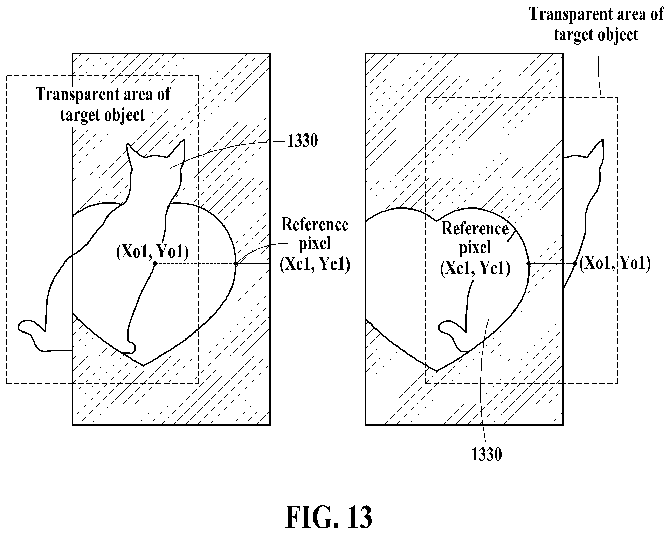

FIG. 13 is a diagram illustrating a change in priority according to an arrangement of a target object according to an embodiment of the disclosure.

Referring to FIG. 13, an example illustrates a condition for determining that a target object 1330 (e.g., the target object 320 of FIG. 3, the target object 1130 of FIG. 11, and target object 1230) has a higher priority than a frame including an overlap area (e.g., the overlap area 930 of FIG. 9, the overlap area 1030 of FIG. 10, and the overlap area 1150).

In other words, as described with reference to FIG. 11, when the target object 1330 exists within the overlap area and satisfies the conditions below, it may be determined that the target object 1330 has a higher priority than the frame including the overlap area.

The electronic device may determine, from a reference pixel, whether to determine a priority of the target object to be higher than the frame including the overlap area, based on a leftmost pixel and/or a rightmost pixel of the target object having the same y-coordinate value as the reference pixel, and the reference pixel.

Below, the pixel coordinates may be coordinates centered around a lower left portion of a display module.

In an embodiment, an object area (e.g., the object area 411 of FIG. 4, the object area 421 of FIG. 4, the object area 511 of FIG. 5, the object area 611 of FIG. 6, the object area 711 of FIG. 7, and the object area 811 of FIG. 8) may have a shape open to the left. In this embodiment, the electronic device may determine whether to determine the priority of the target object higher than the frame including the overlap area by using Equation 1 below, when the reference pixel is a pixel located on the right.

## [Equation 1]
$$Xc1 - Xo1 > T$$

Referring to FIG. 13, coordinates of the reference pixel on the right may be (Xc1, Yc1). However, in FIG. 13, coordinates of the rightmost pixel of the target object 1330 with the same y-coordinate value as Yc1 may be (Xo1, Yo1). Here, Yc1 = Yo1 may be satisfied. The electronic device may determine the priority of the target object to be higher than the frame including the overlap area when Xc1 - Xo1 is greater than T (e.g., a threshold value). T may be a value greater than or equal to 0.

In an embodiment, the object area may have a shape open to the right. In this embodiment, the electronic device may determine whether to determine the priority of the target object higher than the frame including the overlap area by using Equation 2 below, when the reference pixel is a pixel located on the left.

## [Equation 2]
$$Xo2 - Xc2 > T$$

Coordinates of the reference pixel on the left may be (Xc2, Yc2). Coordinates of the leftmost pixel of the target object 1330 with the same y-coordinate value as Yc2 may be (Xo2, Yo2). Here, Yc2 = Yo2 may be satisfied. The electronic device may determine the priority of the target object to be higher than the frame including the overlap area when Xo2 - Xc2 is greater than T (e.g., a threshold value). T may be a value greater than or equal to 0.

In an embodiment, the object area may be a closed shape. When the object area is a closed shape, both a left reference pixel and a right reference pixel may exist. Accordingly, the electronic device may determine the priority of the target object to be higher than the frame including the overlap area when both Equations 1 and 2 are satisfied.

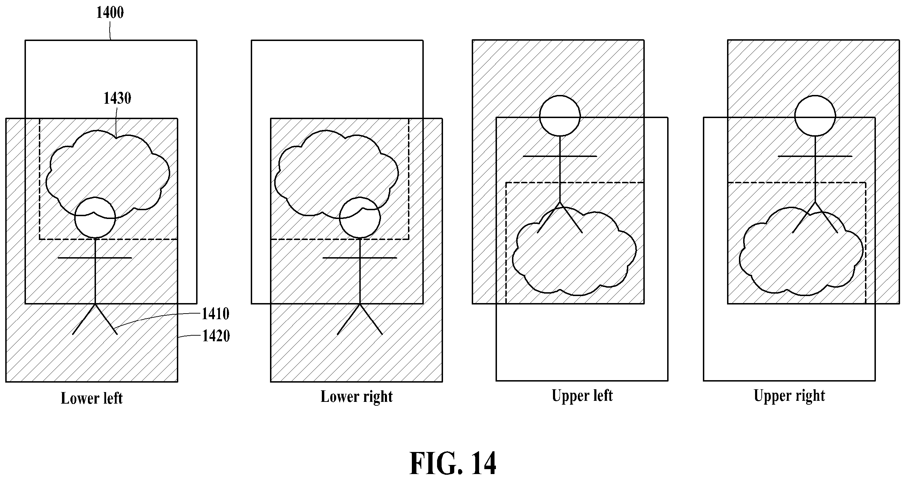

FIG. 14 is a diagram illustrating a range in which a target object may move according to an embodiment of the disclosure.

Referring to FIG. 14, an example illustrates a range in which a target object 1410 (e.g., the target object 320 of FIG. 3, the target object 1130 of FIG. 11, the target object 1230 of FIG. 12, and the target object 1330 of FIG. 13) and a background area 1420 (e.g., the background area 330 of FIG. 3 and the background area 1140 of FIG. 11) may move.

The target object 1410 may be fixed on the background area 1420. Accordingly, the background area 1140 may also move in the same manner as the target object 1410 moves. The size of the background area 1140 may be the same as the size of a target frame 1400 (e.g., the target frame 510 of FIG. 5, the target frame 610 of FIG. 6, the target frame 710 of FIG. 7, the target frame 810 of FIG. 8, the target frame 910 of FIG. 9, the target frame 1010 of FIG. 10, and the target frame 1100 of FIG. 11).

An electronic device may move the target object 1410 within a range in which the background area 1420 may be displayed in an object area 1430 (e.g., the object area 411 of FIG. 4, the object area 421 of FIG. 4, the object area 511 of FIG. 5, the object area 611 of FIG. 6, the object area 711 of FIG. 7, and the object area 811 of FIG. 8). The range in which the electronic device may display the background area 1420 in the object area 1430 may be until one or more corners of the background area meet one or more corners of a rectangle (e.g., the rectangle 920 of FIG. 9 and the rectangle 1020 of FIG. 10) surrounding the object area 1430.

Accordingly, referring to FIG. 14, the target object 1410 may be moved within a range in which the background area 1420 may move to the lower left, lower right, upper left, and upper right.

The electronic device may extract a target object according to the method described above with reference to FIGS. 1 to 14. The electronic device may divide a target frame according to the method described above with reference to FIGS. 1 to 14. The electronic device may determine a priority between the target object and the divided frames according to the method described above with reference to FIGS. 1 to 14. The electronic device may generate a background screen based on the priority and display the background screen on a display module (e.g., the display module 160 of FIG. 1).

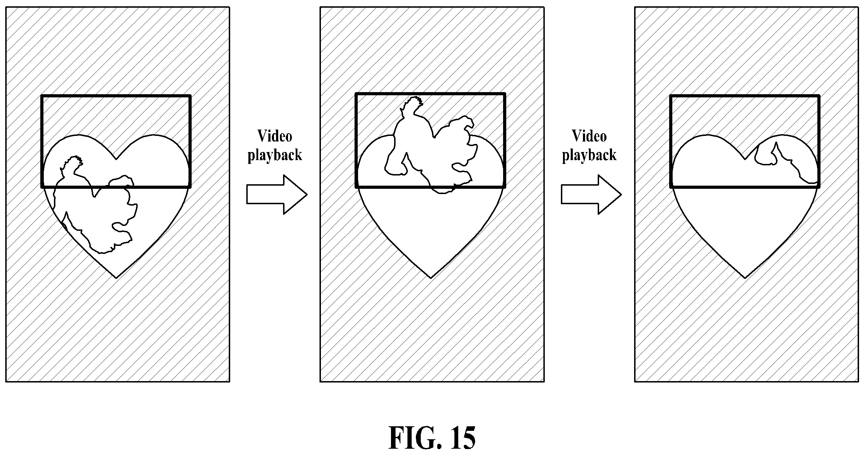

FIG. 15 is a diagram illustrating an example in which a video is set as a background screen according to an embodiment of the disclosure.

According to an embodiment, an electronic device may display a video together with a target frame (e.g., the target frame 510 of FIG. 5, the target frame 610 of FIG. 6, the target frame 710 of FIG. 7, the target frame 810 of FIG. 8, the target frame 910 of FIG. 9, the target frame 1010 of FIG. 10, the target frame 1100 of FIG. 11, and the target frame 1400 of FIG. 14). The electronic device may extract a target object (e.g., the target object 320 of FIG. 3, the target object 1130 of FIG. 11, the target object 1230 of FIG. 12, the target object 1330 of FIG. 13, and the target object 1410 of FIG. 14) for each frame of the video according to the method described above with reference to FIGS. 1 to 14. The electronic device may divide the target frame according to the method described above with reference to FIGS. 2 to 14. The electronic device may determine a priority between the target object and the divided frames for each frame of the video according to the method described above with reference to FIGS. 2 to 14. The electronic device may generate a background screen based on the priority.

FIG. 15 is a diagram illustrating the change in a background screen according to the playback of a video when the background screen is generated together with a target frame using the video. In FIG. 15, the video may be of a cat appearing in an object area (e.g., the object area 411 of FIG. 4, the object area 421 of FIG. 4, the object area 511 of FIG. 5, the object area 611 of FIG. 6, the object area 711 of FIG. 7, the object area 811 of FIG. 8, and the object area 1430 of FIG. 14) and going out of an overlap area (e.g., the overlap area 930 of FIG. 9, the overlap area 1030 and overlap area 1150 of FIG. 10).

Accordingly, a priority between the target object and the frames into which the target frame is divided may change in a frame in which the cat goes out of the overlap area, among the frames of the video.

FIG. 16 is a diagram schematically illustrating an operation of an electronic device according to an embodiment of the disclosure.

According to an embodiment, the electronic device may move the positions of objects (e.g., a clock, widget, and the like) placed on a background screen when a target object 1600 (e.g., the target object 320 of FIG. 3, the target object 1130 of FIG. 11, the target object 1230 of FIG. 12, the target object 1330 of FIG. 13, and the target object 1410 of FIG. 14) is moved. This is because visibility may be reduced when the target object 1600 overlaps with objects placed on the background screen.

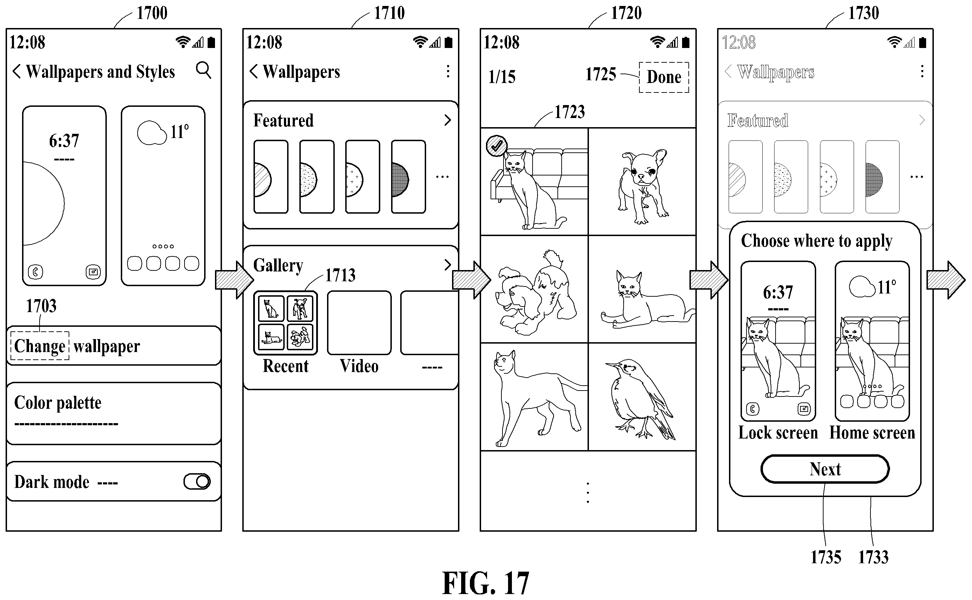

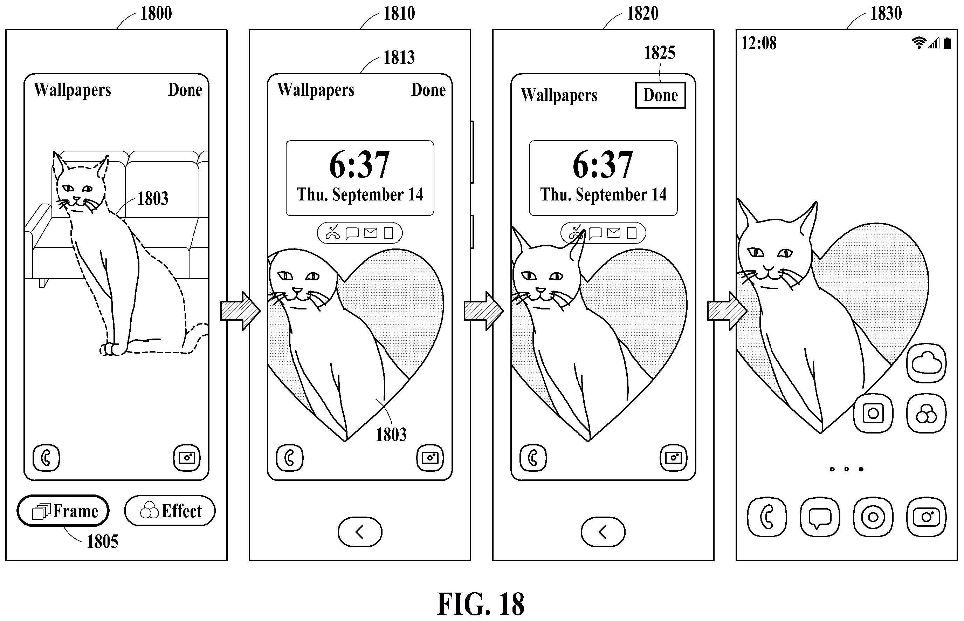

FIGS. 17 and 18 are diagrams schematically illustrating an operation of an electronic device according to an embodiment of the disclosure.

Referring to FIGS. 17 and 18, screens (e.g., screen 1 1700 to screen 4 1730 and screen 5 1800 to screen 8 1830) displayed through a display module (e.g., the display module 160 of FIG. 1) of an electronic device (e.g., the electronic device 101 of FIG. 1) according to a user input are illustrated. For ease of description, only the screens of the electronic device are shown, and the electronic device and the display module of the electronic device are omitted.

The electronic device may display the screen 1 1700 providing settings for the background screen. Although not shown in FIG. 17, the electronic device may display the screen 1 1700 in response to a user input received through various schemes, such as a long press on at least a portion of a home screen, an edit button on a specific image in a settings application, or a gallery application.

When a user input 1703 (e.g., a touch on a change wallpaper button) is received on the screen 1 1700, the electronic device may display the screen 2 1710 that provides a change to the background screen.

On the screen 2 1710, the electronic device may display various images that may be set as the background screen. For example, the electronic device may display images provided by default on the screen 2 1710. For example, the electronic device may display folders of the gallery application on the screen 2 1710, and display images included in each folder in thumbnail format. For ease of description, below, the electronic device may receive a user input 1713 (e.g., a touch on a recent folder) for a recent folder among the folders in the gallery application. However, this is only an example and the present disclosure is not limited thereto.

The electronic device may display the screen 3 1720 including images included in the recent folder in response to receiving the user input 1713 for the recent folder.

On the screen 3 1720, the electronic device may receive a selection input from the user for an image 1723 to be set as the background screen. When the selection input for the image 1723 is received and then a user input 1725 (e.g., a touch on a done button) is received, the electronic device may display the screen 4 1730.

The screen 4 1730 may include a pop-up window 1733. The pop-up window 1733 may be a window that provides application of the image selected in the screen 3 1720 to the home screen and/or lock screen. When a user input 1735 (e.g., a selection input for a next button) is received on the screen 4 1730, the electronic device may display the screen 5 1800 of FIG. 18 showing a preview of the background screen with the image 1723 applied.

The electronic device may extract a target object 1803 (e.g., the target object 320 of FIG. 3, the target object 1130 of FIG. 11, the target object 1230 of FIG. 12, the target object 1330 of FIG. 13, the target object 1410 of FIG. 14, and the target object 1600 of FIG. 16) from the image 1723. The extraction of the target object 1803 is described above with reference to FIG. 3, so a repeated description is omitted.

On the screen 5 1800, the electronic device may activate a border of the target object 1803 to indicate that the target object 1803 is extracted. On the screen 5 1800, a user input 1805 (e.g., a selection input for a frame generation button) may be received.

When the user input 1805 is received, the electronic device may display, on the screen 6 1810, a preview of the background screen including a target frame 1813 (e.g., the target frame 510 of FIG. 5, the target frame 610 of FIG. 6, the target frame 710 of FIG. 7, the target frame 810 of FIG. 8, the target frame 910 of FIG. 9, the target frame 1010 of FIG. 10, the target frame 1100 of FIG. 11, and the target frame 1400 of FIG. 14), the target object 1803, and a background area (e.g., the background area 330 of FIG. 3). According to an embodiment, when the user input 1805 is received, the electronic device may provide a selection screen for a plurality of frames and select the target frame 1813 based on a user input through the selection screen.

On the screen 6 1810, the electronic device may move the target object 1803 based on a user input (e.g., an input of selecting and dragging a target object). The electronic device may determine a priority between a first frame (e.g., the first frame 521 of FIG. 5, the first frame 621 of FIG. 6, the first frame 721 of FIG. 7, the first frame 821 of FIG. 8, the first frame 1110 of FIG. 11, and the first frame 1210 of FIG. 12), a second frame (e.g., the first frame 523 of FIG. 5, the second frame 623 of FIG. 6, the second frame 723 of FIG. 7, the second frame 823 of FIG. 8, the second frame 1120 of FIG. 11, and the second frame 1220 of FIG. 12), and the target object 1803, based on the movement of the target object 1803. The method of determining the priority is described above with reference to FIG. 11, so a repeated description is omitted.

The screen 7 1820 may display a preview of the background screen in which a priority is determined in the order of the second frame, the target object, the first frame, and the background area. On the screen 7 1820, a user input 1825 (e.g., a selection input for a done button) may be received to set the preview of the background screen displayed in the screen 7 1820 as the background screen. For example, when the user input 1825 is received, the electronic device may set the preview of the background screen as the background screen for at least one of the screens (e.g., a lock screen or home screen) selected on the screen 4 1730 of FIG. 7.

The screen 8 1830 may be a home screen in which the preview of the background screen included in the screen 1820 is set as the background screen.

Since the operations of the electronic device on each screen in FIGS. 17 and 18 are applied as described above with reference to FIGS. 1 to 15, a more detailed description is omitted.

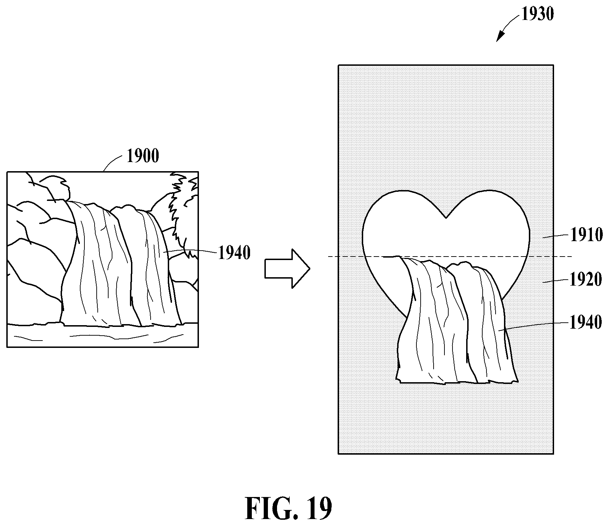

FIG. 19 is a diagram illustrating an overlap between a second frame and a target object according to an embodiment of the disclosure.

According to an embodiment, an overlap area (e.g., the overlap area 930 of FIG. 9, the overlap area 1030 of FIG. 10, and the overlap area 1150 of FIG. 11) may be included in a second frame 1920 (e.g., the first frame 523 of FIG. 5, the second frame 623 of FIG. 6, the second frame 723 of FIG. 7, the second frame 823 of FIG. 8, the second frame 1120 of FIG. 11, and the second frame 1220 of FIG. 12).

In a case where the overlap area is included in the second frame 1920 rather than a first frame 1910 (e.g., the first frame 521 of FIG. 5, the first frame 621 of FIG. 6, the first frame 721 of FIG. 7, the first frame 821 of FIG. 8, the first frame 1110 of FIG. 11, and the first frame 1210 of FIG. 12) as in FIG. 19, the features of a target object 1940 (e.g., the target object 320 of FIG. 3, the target object 1130 of FIG. 11, the target object 1230 of FIG. 12, the target object 1330 of FIG. 13, the target object 1410 of FIG. 14, the target object 1600 of FIG. 16, and the target object 1803 of FIG. 18) (e.g., a waterfall, a roller coaster, and the like) having top-to-bottom features may be maintained in a generated background screen 1930.

For example, referring to FIG. 19, a target image 1900 (e.g., the target image 310 of FIG. 3) may include the target object (e.g., a waterfall). The target object 1940 extracted from the target image 1900 may overlap with the second frame 1920. That is, when the target object 1940 does not exceed the overlap area, a priority of the target object 1940 may be higher than a priority of the second frame 1920, so the target object 1940 may be displayed first.

However, as the target object 1940 moves and the target object 1940 exceeds the overlap area included in the second frame 1920, the priority of the second frame 1920 may become higher than the priority of the target object 1940, so that the priority of the second frame 1920 may be displayed before the target object 1940.

When the overlap area is included in the second frame 1920, the matters described above with reference to FIGS. 1 to 18 are still applied, so a more detailed description is omitted.

An electronic device (e.g., the electronic device 101 of FIG. 1) according to an embodiment of the disclosure may include memory (e.g., the memory 130 of FIG. 1) storing instructions. The electronic device may include a processor (e.g., the processor 120 of FIG. 1) that executes the instructions. The instructions, when executed by the processor, may cause the electronic device to extract a target object (e.g., the target object 320 of FIG. 3, the target object 1130 of FIG. 11, the target object 1230 of FIG. 12, the target object 1330 of FIG. 13, and target object 1410 of FIG. 14) from an image (e.g., the image 310 of FIG. 3). The instructions, when executed by the processor, may cause the electronic device to divide, into a first frame (e.g., the first frame 521 of FIG. 5, the first frame 621 of FIG. 6, the first frame 721 of FIG. 7, the first frame 821 of FIG. 8, the first frame 1110 of FIG. 11, and the first frame 1210 of FIG. 12) and a second frame (e.g., the first frame 523 of FIG. 5, the second frame 623 of FIG. 6, the second frame 723 of FIG. 7, the second frame 823 of FIG. 8, the second frame 1120 of FIG. 11, and the second frame 1220 of FIG. 12), a target frame (e.g., the target frame 510 of FIG. 5, the target frame 610 of FIG. 6, the target frame 710 of FIG. 7, the target frame 810 of FIG. 8, the target frame 910 of FIG. 9, the target frame 1010 of FIG. 10, the target frame 1100 of FIG. 11, and the target frame 1400 of FIG. 14) to be displayed together with the target object among a plurality of frames (e.g., the plurality of frames 400 of FIG. 4). The instructions, when executed by the processor, may cause the electronic device to determine a priority between the target object, the first frame, and the second frame based on a position of the target object. The instructions, when executed by the processor, may cause the electronic device to display, on a display module (e.g., the display module 160 of FIG. 1), a background screen generated by arranging the target object, the first frame, and the second frame in order of the priority.

The instructions, when executed by the processor, may cause the electronic device to determine one or more reference pixels (e.g., the reference pixel 841 of FIG. 8 and the reference pixel 843 of FIG. 8) based on a shape of an object area (e.g., the object area 411 of FIG. 4, the object area 421 of FIG. 4, the object area 511 of FIG. 5, the object area 611 of FIG. 6, the object area 711 of FIG. 7, the object area 811 of FIG. 8, and the object area 1430 of FIG. 14) included in a target frame. The instructions, when executed by the processor, may cause the electronic device to divide the target frame into the first frame and the second frame based on the one or more reference pixels.

The instructions, when executed by the processor, may cause the electronic device to divide the target frame into the first frame and the second frame using a leftmost pixel (e.g., the leftmost pixel 541 of FIG. 5 and the leftmost pixel 641 of FIG. 6) and/or a rightmost pixel (e.g., the rightmost pixel 543 of FIG. 5, the rightmost pixel 643 of FIG. 6, and the rightmost pixel 743 of FIG. 7) of the object area as the one or more reference pixels.

The instructions, when executed by the processor, may cause the electronic device to divide the target frame into the first frame and the second frame using an uppermost pixel (e.g., the uppermost pixel 545 of FIG. 5 and the uppermost pixel 745 of FIG. 7) and/or a lowermost pixel (e.g., the lowermost pixel 547 of FIG. 5, the lowermost pixel 547 of FIG. 6, and the lowermost pixel 747) of the object area as the one or more reference pixels.

The first frame or the second frame may include an overlap area (e.g., the overlap area 930 of FIG. 9, the overlap area 1030 of FIG. 10, and the overlap area 1150 of FIG. 11) that may overlap with the target object depending on the position of the target object. The instructions, when executed by the processor, may cause the electronic device to determine the priority between the target object, the first frame, and the second frame based on whether a portion of the target object exists beyond the overlap area in a direction (e.g., the direction 1180 of FIG. 101) in which the overlap area exists.

The instructions, when executed by the processor, may cause the electronic device to determine the priority in an order of a frame not including the overlap area, the target object, and a frame including the overlap area, when a portion of the target object does not exist beyond the overlap area in the direction in which the overlap area exists.

The instructions, when executed by the processor, may cause the electronic device to determine a priority of the target object to be lower than the first frame and the second frame when a portion of the target object exists beyond the overlap area in the direction in which the overlap area exists.

The instructions, when executed by the processor, may cause the electronic device to, when a portion of the target object overlaps the reference pixel as the position of the target object moves even when the priority of the target object is higher than a frame including the overlap area, change the priority of the target object based on a transparency of a pixel included in the portion of the target object.

An electronic device according to an embodiment of the disclosure may include memory storing instructions. The electronic device may include a processor that executes the instructions. The instructions, when executed by the processor, may cause the electronic device to extract a target object from an image. The instructions, when executed by the processor, may cause the electronic device to divide, into a first frame and a second frame, a target frame to be displayed with the target object among a plurality of frames, based on a shape of an object area included in a target frame. The instructions, when executed by the processor, may cause the electronic device to display, on a display module, a background screen generated by arranging the target object, the first frame, and the second frame.

An operation method of an electronic device according to an embodiment of the disclosure may include extracting a target object from an image. The operation method may include dividing, into a first frame and a second frame, a target frame to be displayed together with the target object among a plurality of frames. The operation method may include determining a priority between the target object, the first frame, and the second frame based on a position of the target object. The operation method may include displaying, on a display module, a background screen generated by arranging the target object, the first frame, and the second frame in order of the priority.

The dividing of the target frame into the first frame and the second frame may include determining one or more reference pixels based on a shape of an object area included in the target frame. The dividing into the first frame and the second frame may include dividing the target frame into the first frame and the second frame based on the one or more reference pixels.

The dividing of the target frame into the first frame and the second frame based on the one or more reference pixels may include dividing the target frame into the first frame and the second frame using a leftmost pixel and/or a rightmost pixel of the object area as the one or more reference pixels.

The dividing of the target frame into the first frame and the second frame based on the one or more reference pixels may include dividing the target frame into the first frame and the second frame using an uppermost pixel and/or a lowermost pixel of the object area as the one or more reference pixels.

The first frame or the second frame may include an overlap area that may overlap with the target object, depending on the position of the target object. The determining of the priority may include determining the priority between the target object, the first frame, and the second frame based on whether a portion of the target object exists beyond the overlap area in the direction in which the overlap area exists.

The determining of the priority may include determining the priority in an order of a frame not including the overlap area, the target object, and a frame including the overlap area, when a portion of the target object does not exist beyond the overlap area in the direction in which the overlap area exists.

The determining of the priority may include determining a priority of the target object to be lower than the first frame and the second frame when a portion of the target object exists beyond the overlap area in the direction in which the overlap area exists.

The operation method may further include changing the priority of the target object based on a transparency of a pixel included in a portion of the target object, when the portion of the target object overlaps the reference pixel as the position of the target object moves, even when the priority of the target object is higher than the priority of a frame including the overlap area.

A non-transitory computer-readable storage medium according to an embodiment of the disclosure may store one or more programs storing instructions that may execute any one of the operations of the above-described operation method.

The embodiments of the present disclosure disclosed in this specification and drawings are merely specific examples presented to easily describe the technical contents according to the embodiments of the present disclosure and to help understand the embodiments of the present disclosure, and are not intended to limit the scope of the embodiments of the present disclosure. Therefore, the scope of the various embodiments of the present disclosure should be interpreted as including all changes or modified forms derived based on the technical ideas of the various embodiments of the present disclosure in addition to the embodiments disclosed herein.

## Claims

1. An electronic device 101 comprising:

   memory 130 storing instructions; and
   a processor 120 executing the instructions, wherein the instructions, when executed by the processor 120, cause the electronic device 101 to:

   extract a target object 320, 1130, 1230, 1330, and 1410 from an image 310, divide, into a first frame 521, 621, 721, 821, 1110, and 1210 and a second frame 523, 623, 723, 823, 1120, and 1220, a target frame 510, 610, 710, 810, 910, 1010, 1100, and 1400 to be displayed together with the target object 320, 1130, 1230, 1330, and 1410 among a plurality of frames 400, determine a priority between the target object 320, 1130, 1230, 1330, and 1410, the first frame 521, 621, 721, 821, 1110, and 1210, and the second frame 523, 623, 723, 823, 1120, and 1220 based on a position of the target object 320, 1130, 1230, 1330, and 1410, and
   display, on a display module 160, a background screen generated by arranging the target object 320, 1130, 1230, 1330, and 1410, the first frame 521, 621, 721, 821, 1110, and 1210, and the second frame 523, 623, 723, 823, 1120, and 1220 according to the priority.

2. The electronic device 101 of claim 1, wherein the instructions, when executed by the processor 120, cause the electronic device 101 to:

   determine one or more reference pixels 841 and 843 based on a shape of an object area 411, 421, 511, 611, 711, 811, and 1430 included in the target frame 510, 610, 710, 810, 910, 1010, 1100, and 1400, and

divide the target frame 510, 610, 710, 810, 910, 1010, 1100, and 1400 into the first frame 521, 621, 721, 821, 1110, and 1210 and the second frame 523, 623, 723, 823, 1120, and 1220, based on the one or more reference pixels 841 and 843.

3. The electronic device 101 of one of claims 1 and 2, wherein the instructions, when executed by the processor 120, cause the electronic device 101 to:
divide the target frame 510, 610, 710, 810, 910, 1010, 1100, and 1400 into the first frame 521, 621, 721, 821, 1110, and 1210 and the second frame 523, 623, 723, 823, 1120, and 1220 by using a leftmost pixel 541 and 641 and/or a rightmost pixel 543, 643, and 743 of the object area 411, 421, 511, 611, 711, 811, and 1430 as the one or more reference pixels.

4. The electronic device 101 of one of claims 1 to 3, wherein the instructions, when executed by the processor 120, cause the electronic device 101 to:
divide the target frame 510, 610, 710, 810, 910, 1010, 1100, and 1400 into the first frame 521, 621, 721, 821, 1110, and 1210 and the second frame 523, 623, 723, 823, 1120, and 1220 by using an uppermost pixel 545 and 745 and/or a lowermost pixel 547 and 747 of the object area 411, 421, 511, 611, 711, 811, and 1430 as the one or more reference pixels.

5. The electronic device 101 of one of claims 1 to 4,

wherein the first frame 521, 621, 721, 821, 1110, and 1210 or the second frame 523, 623, 723, 823, 1120, and 1220 comprises an overlap area 930, 1030, and 1150 that overlaps the target object 320, 1130, 1230, 1330, and 1410 according to the position of the target object 320, 1130, 1230, 1330, and 1410, and
wherein the instructions, when executed by the processor 120, cause the electronic device 101 to:
determine the priority between the target object 320, 1130, 1230, 1330, and 1410, the first frame 521, 621, 721, 821, 1110, and 1210, and the second frame 523, 623, 723, 823, 1120, and 1220 based on whether a portion of the target object 320, 1130, 1230, 1330, and 1410 exists beyond the overlap area 930, 1030, and 1150 in a direction 1180 in which the overlap area 930, 1030, and 1150 exists.

6. The electronic device 101 of one of claims 1 to 5, wherein the instructions, when executed by the processor 120, cause the electronic device 101 to:
in response to the portion of the target object 320, 1130, 1230, 1330, and 1410 not existing beyond the overlap area 930, 1030, and 1150 in the direction 1180 in which the overlap area 930, 1030, and 1150 exists, determine the priority in an order of a frame not including the overlap area 930, 1030, and 1150, the target object 320, 1130, 1230, 1330, and 1410, and a frame including the overlap area 930, 1030, and 1150.

7. The electronic device 101 of one of claims 1 to 6, wherein the instructions, when executed by the processor 120, cause the electronic device 101 to:
in response to the portion of the target object 320, 1130, 1230, 1330, and 1410 existing beyond the overlap area 930, 1030, and 1150 in the direction 1180 in which the overlap area 930, 1030, and 1150 exists, determine the priority of the target object 320, 1130, 1230, 1330, and 1410 to be lower than the first frame 521, 621, 721, 821, 1110, and 1210 and the second frame 523, 623, 723, 823, 1120, and 1220.

8. The electronic device 101 of one of claims 1 to 7, wherein the instructions, when executed by the processor 120, cause the electronic device 101 to:
in response to the portion of the target object 320, 1130, 1230, 1330, and 1410 overlapping the reference pixel as the position of the target object 320, 1130, 1230, 1330, and 1410 moves, even when the priority of the target object 320, 1130, 1230, 1330, and 1410 is higher than the frame including the overlap area 930, 1030, and 1150, change the priority of the target object 320, 1130, 1230, 1330, and 1410 based on a transparency of pixels included in the portion of the target object 320, 1130, 1230, 1330, and 1410.

9. An electronic device 101 comprising:

memory 130 storing instructions; and
a processor 120 executing the instructions, wherein the instructions, when executed by the processor 120, cause the electronic device 101 to:

extract a target object 320, 1130, 1230, 1330, and 1410 from an image 310,
divide, into a first frame 521, 621, 721, 821, 1110, and 1210 and a second frame 523, 623, 723, 823, 1120, and 1220, a target frame 510, 610, 710, 810, 910, 1010, 1100, and 1400 to be displayed together with the target object 320, 1130, 1230, 1330, and 1410 among a plurality of frames 400,
based on a shape of an object area 411, 421, 511, 611, 711, 811, and 1430 included in the target frame 510, 610, 710, 810, 910, 1010, 1100, and 1400, and
display, on a display module 160, a background screen generated by arranging the target object 320, 1130, 1230, 1330, and 1410, the first frame 521, 621, 721, 821, 1110, and 1210, and the second frame 523, 623, 723, 823, 1120, and 1220.

10. An operation method of an electronic device 101, the operation method comprising:

extracting a target object 320, 1130, 1230, 1330, and 1410 from an image 310,
dividing, into a first frame 521, 621, 721, 821, 1110, and 1210 and a second frame 523, 623, 723, 823, 1120, and 1220, a target frame 510, 610, 710, 810, 910, 1010, 1100, and 1400 to be displayed together with the target object 320, 1130, 1230, 1330, and 1410 among a plurality of frames 400,
determining a priority between the target object 320, 1130, 1230, 1330, and 1410, the first frame 521, 621, 721, 821, 1110, and 1210, and the second frame 523, 623, 723, 823, 1120, and 1220 based on a position of the target object 320, 1130, 1230, 1330, and 1410, and
displaying, on a display module 160, a background screen generated by arranging the target object 320, 1130, 1230, 1330, and 1410, the first frame 521, 621, 721, 821, 1110, and 1210, and the second frame 523, 623, 723, 823, 1120, and 1220 according to the priority.

11. The operation method of claim 10, wherein the dividing of the target frame 510, 610, 710, 810, 910, 1010, 1100, and 1400 into the first frame 521, 621, 721, 821, 1110, and 1210 and the second frame 523, 623, 723, 823, 1120, and 1220 comprises:
determining one or more reference pixels 841 and 843 based on a shape of an object area 411, 421, 511, 611, 711, 811, and 1430 included in the target frame 510, 610, 710, 810, 910, 1010, 1100, and 1400, and dividing the target frame 510, 610, 710, 810, 910, 1010, 1100, and 1400 into the first frame 521, 621, 721, 821, 1110, and 1210 and the second frame 523, 623, 723, 823, 1120, and 1220 based on the one or more reference pixels 841 and 843.

12. The operation method of one of claims 10 and 11, wherein
the dividing of the target frame 510, 610, 710, 810, 910, 1010, 1100, and 1400 into the first frame 521, 621, 721, 821, 1110, and 1210 and the second frame 523, 623, 723, 823, 1120, and 1220 based on the one or more reference pixels 841 and 843 comprises:
dividing the target frame 510, 610, 710, 810, 910, 1010, 1100, and 1400 into the first frame 521, 621, 721, 821, 1110, and 1210 and the second frame 523, 623, 723, 823, 1120, and 1220 by using a leftmost pixel 541 and 641 and/or a rightmost pixel 543, 643, and 743 of the object area 411, 421, 511, 611, 711, 811, and 1430 as the one or more reference pixels.

13. The operation method of one of claims 10 to 12, wherein
the dividing of the target frame 510, 610, 710, 810, 910, 1010, 1100, and 1400 into the first frame 521, 621, 721, 821, 1110, and 1210 and the second frame 523, 623, 723, 823, 1120, and 1220 based on the one or more reference pixels 841 and 843 comprises:
dividing the target frame 510, 610, 710, 810, 910, 1010, 1100, and 1400 into the first frame 521, 621, 721, 821, 1110, and 1210 and the second frame 523, 623, 723, 823, 1120, and 1220 by using an uppermost pixel 545 and 745 and/or a lowermost pixel 547 and 747 of the object area 411, 421, 511, 611, 711, 811, and 1430 as the one or more reference pixels.

14. The operation method of one of claims 10 to 13, wherein

the first frame 521, 621, 721, 821, 1110, and 1210 or the second frame 523, 623, 723, 823, 1120, and 1220 comprises
an overlap area 930, 1030, and 1150 that overlaps the target object 320, 1130, 1230, 1330, and 1410 according to the position of the target object 320, 1130, 1230, 1330, and 1410, and
the determining of the priority comprises:
determining the priority between the target object 320, 1130, 1230, 1330, and 1410, the first frame 521, 621, 721, 821, 1110, and 1210, and the second frame 523, 623, 723, 823, 1120, and 1220 based on whether a portion of the target object 320, 1130, 1230, 1330, and 1410 exists beyond the overlap area 930, 1030, and 1150 in a direction 1180 in which the overlap area 930, 1030, and 1150 exists.

15. A non-transitory computer-readable storage medium storing one or more programs including instructions capable of executing the method of any one of claims 10 to 14.

FIG. 1

EP 4 782 979 A1

```
                        ╭─────────────────╮
                        │      Start      │
                        ╰─────────────────╯
                                 │
                                 ▼                    ╭─ 210
        ┌────────────────────────────────────────────────────┐
        │          Extract target object from image          │
        └────────────────────────────────────────────────────┘
                                 │
                                 ▼                    ╭─ 220
        ┌────────────────────────────────────────────────────┐
        │  Divide, into first frame and second frame, target frame to be  │
        │  displayed together with target object among plurality of frames │
        └────────────────────────────────────────────────────┘
                                 │
                                 ▼                    ╭─ 230
        ┌────────────────────────────────────────────────────┐
        │     Determine priority between target object, first frame,       │
        │     and second frame, based on position of target object         │
        └────────────────────────────────────────────────────┘
                                 │
                                 ▼                    ╭─ 240
        ┌────────────────────────────────────────────────────┐
        │  Display, on display module, background screen generated by arranging │
        │   target object, first frame, and second frame according to priority  │
        └────────────────────────────────────────────────────┘
                                 │
                                 ▼
                        ╭─────────────────╮
                        │       End       │
                        ╰─────────────────╯
```

# FIG. 2

**FIG. 3**

**FIG. 4**

**FIG. 5**

**FIG. 6**

721

710

**Divide horizontally**

745

711

743

723

+

731

733

+

747

**Divide vertically**

**FIG. 7**

810

821

841

843

+

823

811

**FIG. 8**

**FIG. 9**

**FIG. 10**

**FIG. 11**

FIG. 12

**FIG. 13**

FIG. 14

**FIG. 15**

FIG. 16

FIG.17

FIG. 18

EP 4 782 979 A1

**FIG. 19**

## INTERNATIONAL SEARCH REPORT

| International application No. |
|---|
| **PCT/KR2024/015874** |

| A. | CLASSIFICATION OF SUBJECT MATTER |
|---|---|

**G06F 3/04845**(2022.01)i; **G06F 3/04842**(2022.01)i; **G06F 9/451**(2018.01)i

According to International Patent Classification (IPC) or to both national classification and IPC

| B. | FIELDS SEARCHED |
|---|---|

Minimum documentation searched (classification system followed by classification symbols)

G06F 3/04845(2022.01); G06F 3/0481(2013.01); G06F 3/0484(2013.01); G06F 3/14(2006.01); H04N 23/60(2023.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 전자 장치(electronic device), 디스플레이(display), 우선순위(priority), 객체(object), 이미지(image), 오버랩(overlap), 프레임(frame)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | US 2004-0066970 A1 (MATSUGU, Masakazu) 08 April 2004 (2004-04-08)<br>See paragraphs [0194]-[0197]. | 1-15 |
| A | US 2005-0134607 A1 (PURDY, D. Gray) 23 June 2005 (2005-06-23)<br>See paragraphs [0022]-[0074]; and figures 1-8C. | 1-15 |
| A | US 6005574 A (HERROD, John Andrew) 21 December 1999 (1999-12-21)<br>See column 3, line 59 - column 6, line 35; and figures 1-8. | 1-15 |
| A | US 2016-0092083 A1 (VARONIS SYSTEMS, LTD.) 31 March 2016 (2016-03-31)<br>See paragraphs [0022]-[0036]; and figures 1-2. | 1-15 |
| A | KR 10-2020-0101036 A (SAMSUNG ELECTRONICS CO., LTD.) 27 August 2020 (2020-08-27)<br>See paragraphs [0015]-[0153]; and figures 1-9. | 1-15 |

| ☐ Further documents are listed in the continuation of Box C. | ☑ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **24 January 2025** | **24 January 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

INTERNATIONAL SEARCH REPORT

**INTERNATIONAL SEARCH REPORT**
Information on patent family members

International application No.

**PCT/KR2024/015874**

| Patent document cited in search report | | | Publication date (day/month/year) | Patent family member(s) | | | Publication date (day/month/year) |
|---|---|---|---|---|---|---|---|
| US | 2004-0066970 | A1 | 08 April 2004 | DE | 69635101 | T2 | 01 June 2006 |
| | | | | EP | 0774730 | A2 | 21 May 1997 |
| | | | | EP | 0774730 | A3 | 01 April 1998 |
| | | | | EP | 0774730 | B1 | 24 August 2005 |
| | | | | JP | 09-130714 | A | 16 May 1997 |
| | | | | JP | 09-186931 | A | 15 July 1997 |
| | | | | JP | 09-186935 | A | 15 July 1997 |
| | | | | JP | 09-186936 | A | 15 July 1997 |
| | | | | JP | 10-023317 | A | 23 January 1998 |
| | | | | JP | 10-032751 | A | 03 February 1998 |
| | | | | JP | 3727991 | B2 | 21 December 2005 |
| | | | | JP | 3774495 | B2 | 17 May 2006 |
| | | | | US | 2002-0044691 | A1 | 18 April 2002 |
| | | | | US | 6636635 | B2 | 21 October 2003 |
| | | | | US | 6993184 | B2 | 31 January 2006 |
| US | 2005-0134607 | A1 | 23 June 2005 | US | 7265762 | B2 | 04 September 2007 |
| | | | | WO | 2005-060589 | A2 | 07 July 2005 |
| | | | | WO | 2005-060589 | A3 | 12 January 2006 |
| US | 6005574 | A | 21 December 1999 | JP | 05-150930 | A | 18 June 1993 |
| | | | | JP | 812587 | B2 | 07 February 1996 |
| US | 2016-0092083 | A1 | 31 March 2016 | US | 10146562 | B2 | 04 December 2018 |
| KR | 10-2020-0101036 | A | 27 August 2020 | CN | 113647092 | A | 12 November 2021 |
| | | | | CN | 113647092 | B | 20 August 2024 |
| | | | | CN | 118741001 | A | 01 October 2024 |
| | | | | EP | 3915245 | A1 | 01 December 2021 |
| | | | | US | 11678047 | B2 | 13 June 2023 |
| | | | | US | 2020-0267327 | A1 | 20 August 2020 |
| | | | | US | 2023-0328362 | A1 | 12 October 2023 |
| | | | | WO | 2020-171579 | A1 | 27 August 2020 |

Form PCT/ISA/210 (patent family annex) (July 2022)